Europäisches Patentamt

European Patent Office

Office européen des brevets

(11) Numéro de publication: **0 031 861**
A2

# (12) DEMANDE DE BREVET EUROPEEN

(21) Numéro de dépôt: 79401053.8

(22) Date de dépôt: 20.12.79

(51) Int. Cl.³: **G 05 D 23/19**
H 02 J 3/14, F 24 D 13/02

(43) Date de publication de la demande:
**15.07.81 Bulletin 81/28**

(84) Etats contractants désignés:
**DE GB NL SE**

(71) Demandeur: **Frere, Bernard**
**Brassac**
**F-09000 Foix(FR)**

(72) Inventeur: **Frere, Bernard**
**Brassac**
**F-09000 Foix(FR)**

(74) Mandataire: **Fruchard, Guy et al,**
**CABINET CHEREAU 107, Boulevard Pereire**
**F-75017 Paris(FR)**

(54) Procédé de régulation d'une installation de chauffage électrique et dispositif permettant de le mettre en oeuvre.

(57) L'invention concerne un procédé de régulation cyclique de la mise en service limitative d'éléments chauffants.

Ce procédé consiste à programmer des temps de travail $\frac{T}{n}$ cycliques de trois groupes au moins d'éléments chauffants où T est la période du cycle et n un nombre entier supérieur à 2. Ce procédé est mis en oeuvre par un dispositif comportant trois contracteurs B1, B2, B3 au moins, actionnés par un commutateur 12 asservi à un organe de commande 13.

EP 0 031 861 A2

./...

Croydon Printing Company Ltd.

FIG.1

0031861

PROCEDE DE REGULATION D'UNE INSTALLATION DE CHAUFFAGE ELECTRIQUE ET DISPOSITIF PERMETTANT DE LE METTRE EN OEUVRE

La présente invention est relative aux installations de chauffage électrique et elle concerne plus particulièrement un procédé de régulation cyclique de la mise en service limitative d'éléments chauffants.

La quantité de chaleur produite par dissipation de l'énergie électrique à travers des résistances autrement dit par "effet Joule " au moyen d'éléments chauffants est généralement réglée automatiquement pour chaque local par un thermostat qui coupe l'alimentation du ou desdits éléments disposés dans un même local lorsqu'une température de référence est atteinte.

L'expérience montre que dans une habitation mettant en pratique un tel procédé dit de " température à la carte " et où la température générale ambiante oscille aux environs de 19°C, température optimale pour le confort physique des occupants, l'ensemble des éléments chauffants travaille effectivement 12 Heures sur 24.

L'objet de la présente invention est de programmer l'arrêt de certains éléments chauffants pour délester simultanément l'ensemble des phases d'alimentation du réseau permettant de réaliser une économie considérable de consommation d'énergie et laissant ainsi à l'utilisateur une puissance disponible plus importante.

A cet effet, le procédé suivant l'invention consiste à diviser l'ensemble ou l'habitation à chauffer en plusieurs zones et à imposer simultanément à l'intérieur de chaque zone, une rotation cyclique de la mise en service des éléments résistifs chauffants en programmant cycliquement des temps de travail $\frac{T}{n}$ de trois groupes d'éléments chauffants au moins où T est la période du cycle et n un nombre entier supérieur à 2. Ce choix préférentiel de n est remarquable par le fait qu'il permet une réduction de consommation d'énergie plus importante que dans le cas d'une installation classique puisque les éléments chauffants ont un temps de travail effectif de $\frac{24}{n}$ heures et en conséquence nettement inférieur à 12 Heures comme celui obtenu par le procédé dit de " température à la carte ".

Afin de répondre dans les meilleures conditions aux besoins calorifiques de l'habitation et en tenant compte de la faible inertie des éléments chauffants, il a été déterminé expérimentalement pour la période T du cycle une durée de quinze minutes et pour n le nombre 3 de sorte que pendant quinze minutes chaque groupe desdits éléments travaille cinq minutes et est au repos dix minutes.

Selon l'importance des déperditions thermiques résultant généralement de l'écart entre la température intérieure et la température extérieure de l'habitation, ce procédé pourra être mis en application uniquement pendant les heures de repos et/ou les heures d'absence autorisant de ce fait pendant les temps d'occupation des locaux un fonctionnement classique de l'installation de chauffage.

Bien évidemment, les éléments chauffants à l'intérieur d'un même groupe seront répartis d'une part, quantitativement sur chacune des phases du réseau de distribution et d'autre part, dans l'ensemble des locaux de l'habitation.

D'autres caractéristiques et d'autres avantages de la présente invention apparaîtront mieux à la lecture de la description ci-après donnant, à titre d'exemples non limitatifs et en regard des dessins annexés, divers modes de réalisation d'un dispositif permettant de mettre en oeuvre le procédé de l'invention.

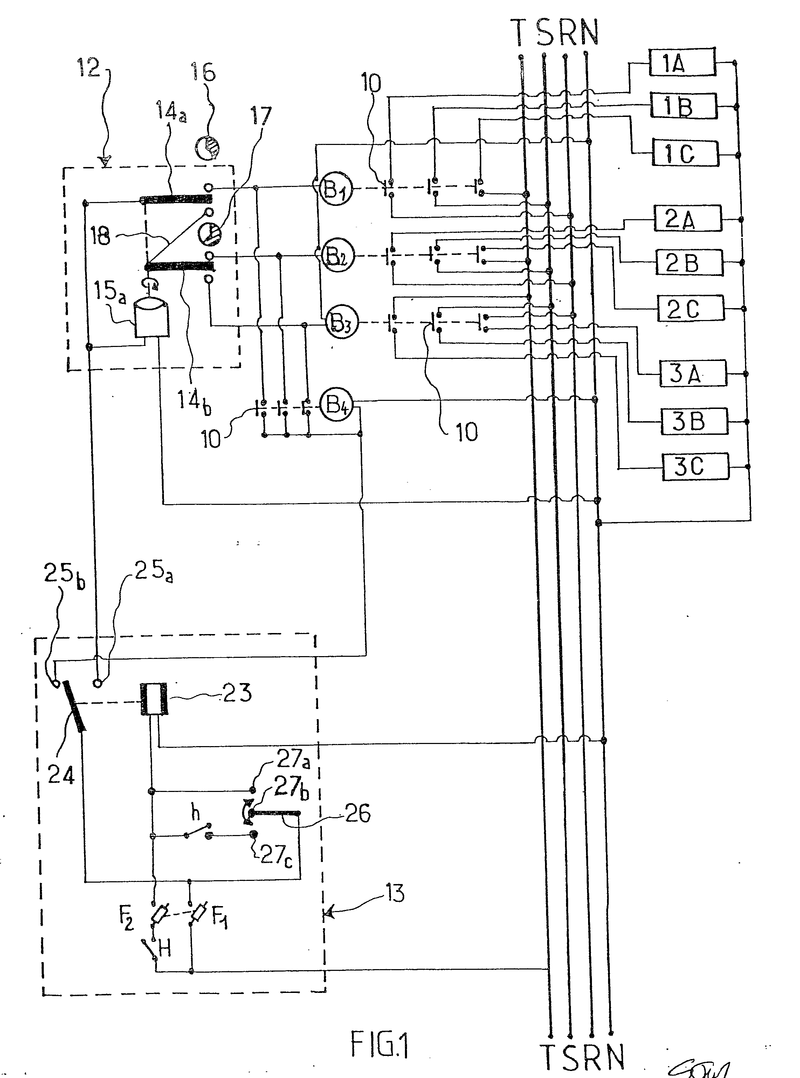

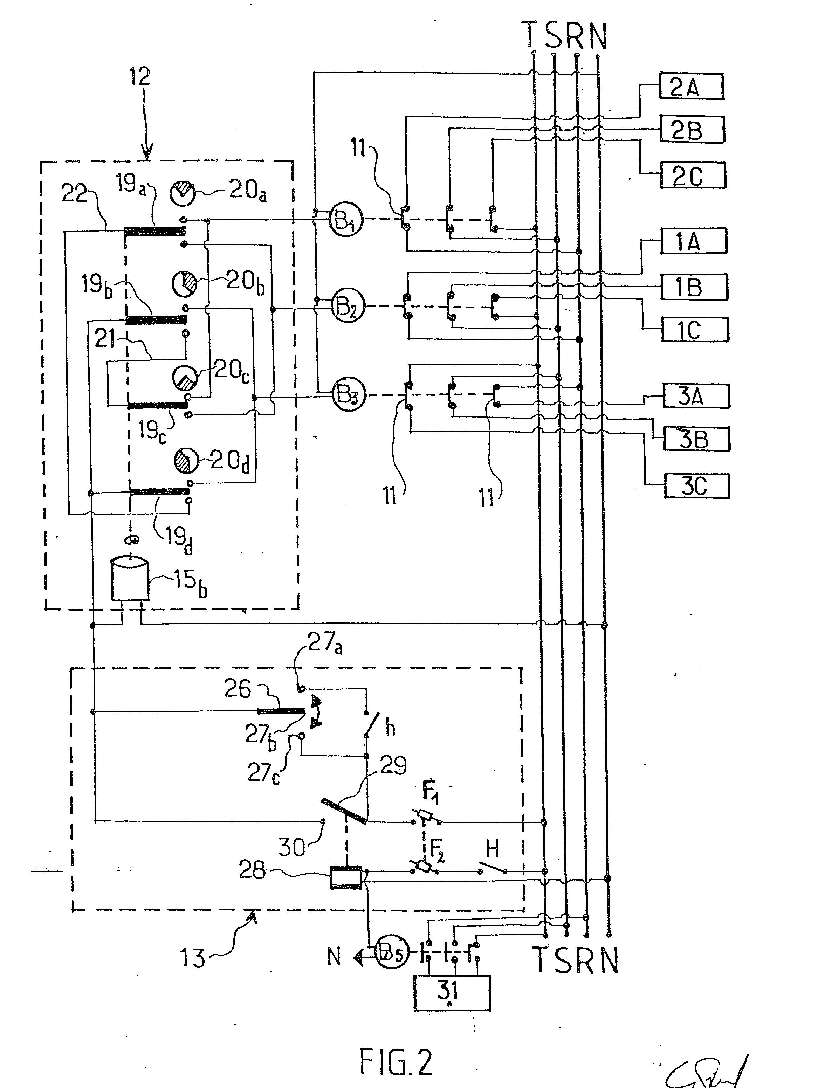

Sur ces dessins : la figure 1 et la figure 2 sont des schémas d'un dispositf régulant neuf convecteurs 1A, 1B, 1C et 2A, 2B, 2C, et 3A, 3B, 3C, répartis dans trois zones A,B et C d'une habitation moyenne comportant par exemple trois chambres, une salle de séjour, une cuisine et des locaux annexes. Ce nombre de zones et de convecteurs donné simplement à titre d'exemple pourra être modifié selon des applications particulières.

On notera que les convecteurs 1A, 2A, 3A, sont branchés entre le neutre N et la phase R, les convecteurs 1B, 2B, 3B, entre le neutre N et la phase S et les convecteurs 1C,2C, 3C, entre le neutre N et la phase T ce qui équivaut pour chacun d'eux à une alimentation en 220 volts. De même on pourra prévoir un dispositif semblable pour une alimentation en triphasé.

0031861

Sur l'alimentation en phase de chacun de ces convecteurs sont interposés des contacts susceptibles d'interrompre ladite alimentation de chaque appareil. Ces contacts, représentés au repos peuvent être soit à fermeture ( contacts 10 de la figure 1 ) soit à ouverture ( contacts 11 de la figure 2 ). Ces contacts sont pilotés par trois contacteurs B1, B2, B3 qui généralement sont des bobines dont l'excitation amène soit la fermeture des contacts 10 soit l'ouverture des contacts 11 reliés mécaniquement à la bobine en cause. Cette liaison mécanique est représentée par des pointillés entre la bobine et les contacts.

Les bobines B1, B2, B3 sont alimentées entre le neutre N et la phase T. Sur l'alimentation en phase de ces bobines on remarquera la présence d'un commutateur 12 et d'un organe de commande 13 mettant en service ledit commutateur. Le rôle de ce commutateur qui peut être aussi bien du type programmateur électronique que du type mécanique plus couramment appelé programmateur à cames, est d'alimenter successivement et cycliquement les bobines B1, B2, B3 .

Cependant, selon que les contacts soient à fermeture ou à ouverture les diagrammes d'excitation des bobines seront inversés afin d'obtenir dans les deux cas un temps de travail des convecteurs pour deux temps de repos.

Dans un premier mode de réalisation du dispositif, illustré à la figure 1, on a pris pour exemple des contacts à fermeture 10 actionnés par le commutateur 12 constitué par un programmateur à deux cames 14a et 14b accouplées sur l'arbre de sortie d'un moteur 15a dont la vitesse de rotation est de un tour en quinze minutes. Ces cames 14a et 14b sont volontairement décalées angulairement de 120° comme le montrent les représentations symboliques 16 et 17. La partie hachurée de la représentation 16 correspond à 120° de rotation pendant laquelle la came 14a établit le contact sur une borne connectée à la bobine B1 et celle de la représentation 17 correspondant à 240° de rotation pendant laquelle là came 14b établit le contact sur une borne connectée à la bobine B2. On observera que la deuxième borne de la came 14a non connectée à une bobine est associée électriquement à l'entrée de la came 14b par une connexion 18.

Ce programmateur à deux cames actionnées par un moteur effectuant un tour en quinze minutes fonctionne de la façon suivante.

Dans un premier temps, les cames 14a et 14b effectuent le premier secteur d'angle de 0 à 120° correspondant à cinq minutes de rotation de l'arbre du moteur 15a. Pendant ces cinq minutes la came 14a établit le contact sur la borne de la bobine B1 et la came 14b sur la borne de la bobine B2 mais cette dernière restera au repos puisque l'entrée de la came 14b n'est pas alimentée. Il en résulte que pendant les cinq première minutes de rotation seule la bobine B1 est excitée, ferme les contacts associés 10 et les convecteurs 1A, 1B, 1C sont alimentés sur les trois phases R, S, T du réseau de distribution.

Dans un deuxième temps, les cames 14a et 14b entament le deuxième secteur d'angle de 120 à 240° ce qui équivaut également à cinq minutes de rotation de l'arbre du moteur 15a. La came 14a détourne alors le contact sur l'autre borne, alimentant de ce fait l'entrée de la came 14b toujours positionnée sur la borne de la bobine B2. Ainsi seule la bobine B2 est excitée, ferme les contacts 10 et les convecteurs 2A, 2B, 2C, également répartis sur les trois phases R,S, T sont en service.

Dans un troisième et dernier temps, correspondant aux cinq dernières minutes du cycle, les cames 14a et 14b terminent le dernier secteur d'angle de 240 à 360°. La came 14a maintient la même position que dans le deuxième temps générant ainsi l'entrée de la came 14b. Cette dernière alimente alors la borne de la bobine B3 dont l'excitation ferme les contacts 10 associés, autorisant ainsi l'alimentation des convecteurs 3A,3B, 3C, sur les trois phases R,S,T.

On comprendra alors que pour chaque période de quinze minutes les bobines B1,B2,B3, sont successivement excitées pendant cinq minutes et au repos dix minutes et que les convecteurs associés à l'excitation de ces bobines ont le même programme de travail.

Dans un deuxième mode de réalisation du dispositif, illustré à la figure 2 on a pris pour exemple des contacts à ouverture 11 actionnés sélectivement par le commutateur 12 constitué par un programmateur à quatre cames 19a, 19b, 19c, 19d accouplées sur l'arbre de sortie d'un moteur 15b dont la vitesse de rotation est de un tour en trente minutes. Bien évidemment les contacts 11 étant au repos , et donc fermés, les diagrammes d'excitation des bobines B1, B2 B3, seront inversés puisque cette excitation aura pour conséquence immédiate de mettre au repos les convecteurs en ouvrant les contacts 11 disposés sur leur alimentation en phase.

Comme dans le premier cas, les cames 19a, 19b, 19c, 19d sont décalées angulairement comme l'illustrent les représentations symboliques 20a, 20b, 20c,20d . La partie hachurée de la représentation 20a correspond au secteur d'angle 300 à 60° pendant lequel la came 19a établit le contact sur une borne connectée à la bobine B2. Celle de la représentation 20b correspond au secteur d'angle de 0 à 120° pendant lequel la came 19b établit le contact sur une borne connectée à la bobine B3. Celle de la représentation 20c correspond au secteur d'angle 120 à 240° pendant lequel la came 19c établit le contact sur une borne connectée à la bobine B2 et enfin celle de la représentation 20d correspond au secteur d'angle 180 à 300 ° pendant lequel la came 19d établit le contact sur une borne connectée à la bobine B3. On observera d'une part, que les entrées des cames 19b et 19d sont alimentées directement en phase et d'autre part, que les bornes libres des cames 19a et 19c sont connectées à la bobine B1. La borne libre de la came 19b est reliée électriquement par une connexion 21 à l'entrée de la came 19c et la borne libre de la came 19d est reliée électriquement par une connexion 22 à l'entrée de la came 19a.

Ce programmateur à quatre cames actionnées par un moteur effectuant un tour en trente minutes fonctionne de la façon suivante .

Dans un premier temps, les cames effectuent le premier secteur d'angle de 0 à 60° correspondant à cinq minutes de rotation de l'arbre du moteur 15b. La came 19d établit le contact sur la borne reliée à l'entrée de la came 19a par la connexion 22 alimentant la came 19a orientée sur la borne connectée à la bobine B2 de sorte que cette dernière est excitée. La came 19b branchée sur la borne de la bobine B3 alimente cette dernière et la came 19c non alimentée par la connexion 21 n'assure aucun rôle. Il en résulte que pendant les cinq première minutes de rotation seule la bobine B1 n'est pas excitée de sorte que les contacts 11 associés restent fermés et les convecteurs 1A, 1B, 1C, sont alimentés.

Dans un deuxième temps, les cames effectuent le deuxième secteur d'angle de 60 à 120° équivalant à cinq minutes de rotation. La came 19a toujours alimentée par la connexion 22, puisque la came 19d reste dans la même position, détourne l'excitation sur la bobine B1. Les cames 19b et 19c restent dans les mêmes

0031861

positions de sorte que la bobine B3 est excitée. Ainsi seule la bobine B2 est au repos, les contacts 11 restent fermés et les convecteurs 2A, 2B, 2C sont alimentés pendant cinq minutes.

Dans un troisième temps équivalant au secteur d'angle 120 à 180°, les cames 19a et 19d restent dans la même position de sorte que la bobine B1 est excitée et la came 19b détourne son alimentation sur la borne reliée à l'entrée de la came 19c par la connexion 21. Cette came 19c étant alors positionnée sur la borne connectée à la bobine B2, cette dernière est excitée. Seule la bobine B3 n'est pas excitée, ses contacts 11 associés restent fermés et les convecteurs 3A, 3B, 3C sont alimentés.

Dans un quatrième temps équivalant au secteur d'angle 180 à 240°, la came 19d détourne sa position sur la borne connectée à la bobine B3 et excite cette dernière, la came 19a n'étant plus alimentée en entrée par la connexion 22 n'assure aucun rôle, les cames 19b et 19c sont dans les mêmes positions que dans le troisième temps de sorte que la bobine B2 est également excitée. Aussi seule la bobine B1 est au repos, les contacts 11 associés sont fermés et les convecteurs 1A, 1B, 1C sont alimentés.

Dans un cinquième temps équivalant au secteur d'angle 240 à 300°, les cames 19a et 19d sont dans les mêmes positions que précédemment , donc la bobine B3 est excitée. La came 19b est aussi dans la même position générant de ce fait l'entrée de la came 19c qui dans ce cas détourne sa position sur la borne connectée à la bobine B1 et cette dernière est excitée. La bobine B2 sera alors au repos pendant ces cinq minutes, les contacts 11 associés resteront fermés et les convecteurs 2A, 2B, 2C, sont alimentés.

Dans un sixième et dernier temps équivalant au secteur d'angle 300 à 360°, les cames 19b et 19c sont dans les mêmes positions que précédemment et les cames 19a et 19d dans les mêmes positions que dans le premier secteur d'angle , ce qui équivaut à l'excitation de la bobine B1 et à celle de la bobine B2 . La bobine B3  n'étant pas alimentée , ses contacts associés 11 restent fermés et les convecteurs 3A, 3B, 3C sont en service.

On comprendra dès lors que pour chaque période de trente minutes les bobines B1, B2, B3 sont successivement et cycliquement deux fois au repos pendant cinq minutes, et par conséquent que les convecteurs associés à ces bobines travaillent comme dans le premier mode de réalisation cinq minutes et sont au repos dix minutes.

Il est important d'ajouter qu'avec un tel programme de travail, un tiers des convecteurs de la zone A, un tiers de ceux de
la zone B et un tiers de ceux de la zone C sont constamment
en service et de plus, il s'opère dans chacune des zones A, B,
et C une rotation dans l'espace des sources de chaleur diminuant
considérablement les besoins calorifiques et entraînant de ce
fait une économie de la consommation d'énergie.

Bien entendu, ces deux jeux de cames associés à deux vitesses de rotation de l'arbre d'un moteur ont été donnés à titre
explicatif et il serait possible de prévoir une multitude de
combinaisons entre une vitesse de rotation et un nombre de cames
quelconques mais celles-ci n'ont pas été détaillées comme n'apportant rien de plus à la bonne compréhension de l'invention.

Comme on l'a précisé au début du présent mémoire, le commutateur 12, âme du dispositif permettant de réaliser cet objectif
de un temps de travail pour deux temps de repos d'éléments chauffants, est actionné par l'organe de commande 13 disposé entre la
phase T d'alimentation des bobines et ledit commutateur. Cet organe 13 sera conçu de manière différente selon que les contacts
sont à fermeture ou à ouverture.

La figure 1 représente cet organe de commande 13 dont les
éléments constitutifs sont agencés pour mettre en service périodiquement le commutateur 12 agissant sur des contacts à fermeture
10. Cet organe 13 comprend en sortie du commutateur 12 un relais
inverseur constitué par une bobine 23 et un bras mobile 24 relié
mécaniquement à ladite bobine. L'entrée de ce bras est générée en
phase par l'intermédiaire d'un fusible F1 de protection de sorte
que ce bras alimente soit la borne 25a soit la borne 25b. La
borne 25a est connectée directement au commutateur 12 alors que
la borne 25b est connectée à une bobine auxiliaire B4 dont l'excitation ferme les contacts 10 qui lui sont associés mécaniquement. Ces contacts ferment le circuit d'alimentation sur les
trois bobines B1, B2, B3 simultanément , de sorte que l'installation de chauffage fonctionne classiquement à plein régime.

La position du bras mobile 24 sur la borne 25a et la position du bras sur la borne 25b sont déterminées respectivement
par l'excitation et la désexcitation de la bobine 23.

L'excitation de cette bobine 23 peut être produite sous
plusieurs formes.

D'une part elle peut être sous forme automatique par l'horloge H mise en place par les services du réseau de distribution pour les tarifs de nuit préférentiels et disposée entre la phase T et la bobine 23 par l'intermédiaire d'un second fusible de protection F2 lié mécaniquement au premier fusible F1 afin de supprimer l'installation de chauffage pendant les saisons chaudes.

D'autre part elle peut être sous forme programmée ou sous forme manuelle selon les positions d'un bras 26 d'un inverseur à point milieu dont l'entrée est connectée sur la sortie du fusible F1 . Ce bras 26, actionné par l'utilisateur peut être positionné sur trois bornes 27a, 27b, 27c. La borne 27a est reliée directement à la bobine 23, la borne 27b est isolée électriquement et la borne 27c est connectée à ladite bobine du relais par l'intermédiaire d'une horloge individuelle h dont les temps de coupure sont réglables par l'utilisateur. On comprendra alors que la borne 27a correspond à une commande de l'excitation sous forme manuelle, la borne 27c à une commande de l'excitation sous forme programmée journalièrement et/ou hebdomadairement par l'horloge h et enfin la borne 27b correspond seulement à une commande automatique de l'excitation par l'horloge H.

La figure 2 quant à elle, représente un organe de commande 13 agissant sur le commutateur 12 actionnant des contacts à ouverture 11.

On remarquera la présence de l'inverseur à point milieu autorisant la commande directe du moteur 15b du programmateur à cames sous forme manuelle ou sous forme programmée.

Dans ce cas l'entrée du bras 26 est reliée sur l'entrée du moteur 15b. La borne 27c correspondant à une commande manuelle est connectée sur la sortie du fusible F1 et la borne 27a correspondant à une commande programmée est reliée aussi sur la sortie du fusible F1 par l'intermédiaire de l'horloge h et la borne 27b est isolée électriquement.

L'horloge H du réseau de distribution est reliée par l'intermédiaire du fusible F2 à la bobine 28 d'un relais jouant dans ce cas le rôle de relais d'isolement pour les éventuels autres appareillages pilotés par ladite horloge H et par exemple, pour un chauffe-eau électrique 31 dont la bobine de commande B5 est branchée en phase sur la sortie du fusible F2.

Lorsque la bobine 28 du relais est excitée par l'horloge H , le bras 29 dudit relais établit le contact sur une borne 30

9

**0031861**

reliée directement à l'entrée du moteur 15b de sorte que la sortie du fusible F1 alimentant l'entrée de ce bras, le moteur 15b et par conséquent le commutateur 12 sont mis en service.

Bien entendu, l'invention venant d'être exposée par deux exemples détaillés ,est nullement limitée à ces formes de réalisation ; elle est bien au contraire susceptible de nombreuses variantes accessibles à l'homme de l'art, suivant les applications envisagées et sans limitation autre que celle des termes des revendications qui suivent.

REVENDICATIONS

1. Procédé de régulation pour une installation de chauffage électrique par éléments résistifs , offrant une économie de consommation d'énergie tout en assurant un délestage continu et simultané de l'ensemble des phases du réseau de distribution, CARACTERISE PAR LE FAIT QU'il consiste à diviser l'ensemble à chauffer en plusieurs zones et à imposer simultanément à l'intérieur de chaque zone, une rotation cyclique de la mise en service des éléments résistifs chauffants.

2. Procédé de régulation selon la revendication 1, CARACTERISE PAR LE FAIT QU'il consiste à programmer cycliquement des temps de travail $\frac{T}{n}$ de trois groupes d'éléments résistifs au moins, lesdits éléments étant répartis à l'intérieur de chaque groupe quantitativement sur l'ensemble des phases du réseau de distribution et spatialement dans l'ensemble à chauffer.

3. Procédé selon les revendications 1 et 2, CARACTERISE PAR LE FAIT QUE T, la période du cycle est égale à 15 minutes.

4. Procédé selon les revendications 1 et 2, CARACTERISE PAR LE FAIT QUE n est un nombre entier égal à 3.

5. Dispositif permettant de mettre en oeuvre le procédé suivant les revendications 1,2,3 et 4 prises ensemble et comportant :

   - des contacts interposés sur les connexions alimentant en phase chacun des éléments résistifs et susceptibles d'interrompre l'alimentation desdits éléments,

   - des contacteurs pour piloter lesdits contacts,

   - et, un commutateur du type programmateur à cames pour actionner cycliquement lesdits contacteurs, CARACTERISE PAR LE FAIT QU'il comprend trois contacteurs au moins pilotant chacun des contacts interposés sur les alimentations en phase d'éléments résistifs répartis sous le contrôle d'un même contacteur d'une part, quantitativement sur toutes les phases du réseau de distribution et, d'autre part, spatialement dans l'ensemble à chauffer.

6. Dispositif selon la revendication 5, CARACTERISE PAR LE FAIT QU'il comprend, disposé entre le susdit programmateur et son alimentation en phase, un organe de commande comportant notamment un inverseur à point milieu actionné manuellement , cet organe de commande est destiné à assurer :

   - soit l'arrêt total de l'installation de chauffage,

   - soit le fonctionnement classique à plein régime de ladite installation,

0031861

- soit la mise en service manuelle du programmateur régulant ladite installation,

-soit la mise en service automatique du programmateur, asservie à l'horloge tarifaire du réseau de distribution,

- soit encore, la mise en service automatique du programmateur, asservie à une horloge individuelle programmée.

7. Dispositif selon les revendications 5 et 6, CARACTERISE PAR LE FAIT QUE les susdits contacts sont à fermetures.

8. Dispositif selon les revendications 5 et 6, CARACTERISE PAR LE FAIT QUE les susdits contacts sont à ouvertures.

9. Dispositif selon les revendications 5, 6 et 7, CARACTERISE PAR LE FAIT QUE l'organe de commande comporte un relais inverseur à deux positions commandant la mise en service et l'arrêt dudit programmateur.

10. Dispositif selon les revendications 5,6 et 8, CARACTERISE PAR LE FAIT QUE l'organe de commande comporte un relais à deux positions actionnant ledit programmateur asservi à l'horloge tarifaire du réseau de distribution.

11. Dispositif selon la revendication 9, CARACTERISE PAR LE FAIT QUE la borne du relais inverseur déterminant l'arrêt du programmateur est reliée à un contacteur auxiliaire dont les contacts, à fermetures, excitent simultanément les trois premiers contacteurs.

1/2

0031861

FIG.1

0031861

FIG.2